(19) Europäisches Patentamt
European Patent Office
Office européen des brevets

(11) **EP 4 668 938 A1**

(12) **EUROPEAN PATENT APPLICATION**
published in accordance with Art. 153(4) EPC

(43) Date of publication:
24.12.2025 Bulletin 2025/52

(21) Application number: 23921662.5

(22) Date of filing: 13.02.2023

(51) International Patent Classification (IPC):
*H04W 72/044* (2023.01)

(52) Cooperative Patent Classification (CPC):
H04L 5/00; H04W 72/044

(86) International application number:
PCT/CN2023/075758

(87) International publication number:
WO 2024/168489 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Beijing Xiaomi Mobile Software Co.,
Ltd.
Beijing 100085 (CN)

(72) Inventor: ZHOU, Rui
Beijing 100085 (CN)

(74) Representative: Stöckeler, Ferdinand et al
Schoppe, Zimmermann, Stöckeler
Zinkler, Schenk & Partner mbB
Patentanwälte
Radlkoferstrasse 2
81373 München (DE)

(54) **INFORMATION TRANSMISSION METHOD AND APPARATUS, COMMUNICATION DEVICE, AND STORAGE MEDIUM**

(57) Embodiments of the present disclosure provide an information transmission method and apparatus, a communication device, and a storage medium. A user equipment (UE) sends capability information of the UE to a network device, wherein the capability information is used for the network device to determine the number n of rounds of reference signal measurement performed by the UE in I receiving beam directions, and one round of reference signal measurement comprises measurement of the reference signal performed by J antennas in X of the receiving beam directions, wherein the J antennas cover the I receiving beam directions, J is a positive integer greater than 2, X is a positive integer less than or equal to J, and I is a positive integer greater than J.

FIG. 3

## Description

### FIELD

The present invention relates to, but is not limited to, the field of wireless communication technologies, and more particularly relates to a method and apparatus for information transmission, a communication device and a storage medium.

### BACKGROUND

In an evolution of 5th generation mobile communication, since a beamforming technology is used for a frequency range 2 (FR2) millimeter wave frequency band, when receiving wireless signals, a user equipment (UE) no longer uses an omnidirectional antenna like what does for an FR1 low frequency band. Instead, it needs to additionally introduce beamforming management of receiving beams, so as to use the best receiving beam for reception to achieve a larger uplink coverage range and a better transmission rate. At the same time, due to the introduction of the concept of beam, a spatial dimension is further introduced into the transmission of the UE, that is, a physical resource at the same time and frequency may be further reused via different beams.

### SUMMARY

Embodiments of the present invention provide a method and apparatus for information transmission, a communication device and a storage medium.
A first aspect of embodiments of the present invention provides a method for information transmission, which is performed by a user equipment (UE) and includes: sending capability information of the UE to a network device. The capability information is configured for the network device to determine a number n of rounds of reference signal measurements to be performed by the UE in I receiving beam directions, and one round of reference signal measurement includes one or more reference signal measurements in X receiving beam directions of J antennas. The J antennas cover the I receiving beam directions, J is a positive integer greater than 2, X is a positive integer less than or equal to J, and I is a positive integer greater than J.
In an embodiment, the capability information includes: a receiving beam coverage factor configured to indicate the number n of rounds.
In an embodiment, the number n of rounds is determined according to number of receiving beam directions associated with each antenna and number of receiving beam directions overlapping between the J antennas.
In an embodiment, in a case where J = 2, and each antenna is associated with r receiving beam directions, the number n of rounds is represented by:

$$n = r - Floor(m/2),$$

where n represents the number n of rounds of reference signal measurements, m represents number of receiving beam directions overlapping between the J antennas, and Floor() represents rounding down.
In an embodiment, the method further includes: receiving a measurement configuration sent by the network device. The measurement configuration includes: a measurement duration for the reference signal measurements in the I receiving beam directions, and a beam scanning coefficient N for determining the measurement duration is determined based on the capability information.
In an embodiment, the beam scanning coefficient N is equal to the number n of rounds.
In an embodiment, the antenna includes: an antenna panel.
In an embodiment, the J antennas of the UE support respective reference signal measurements in the same or different receiving beam directions simultaneously.
In an embodiment, the UE includes the J antennas.
In an embodiment, the J antennas of the UE cover the I receiving beam directions.
In an embodiment, the J antennas of the UE are able to perform the reference signal measurement in the X receiving beam directions simultaneously.
A second aspect of embodiments of the present invention provides a method for information transmission, which is performed by a network device and includes: receiving capability information sent by a user equipment (UE). The capability information is configured to determine a number n of rounds of reference signal measurements to be performed by the UE in I receiving beam directions, and one round of reference signal measurement includes one or more reference signal measurements in X receiving beam directions of J antennas. The J antennas cover the I receiving beam directions, J is a positive integer greater than 2, X is a positive integer less than or equal to J, and I is a positive integer greater than J.

In an embodiment, the capability information includes: a receiving beam coverage factor configured to indicate the number n of rounds.

In an embodiment, the number n of rounds is determined according to number of receiving beam directions associated with each antenna and number of receiving beam directions overlapping between the J antennas.

In an embodiment, in a case where J = 2, and each antenna is associated with r receiving beam directions, the number n of rounds is represented by:

$$n = r - Floor(m/2),$$

where n represents the number n of rounds of reference signal measurements, m represents the number of receiving beam directions overlapping between the J antennas, and Floor() represents rounding down.

In an embodiment, the method further includes: determining a beam scanning coefficient N according to the capability information; and determining a measurement duration for the UE to perform the reference signal measurements in the I receiving beam directions according to the beam scanning coefficient N.

In an embodiment, the beam scanning coefficient N is equal to the number n of rounds.

In an embodiment, the method further includes: sending a measurement configuration to the UE. The measurement configuration at least includes: the measurement duration.

In an embodiment, the antenna includes: an antenna panel.

In an embodiment, the J antennas of the UE support respective reference signal measurements in the same or different receiving beam directions simultaneously.

In an embodiment, the UE includes the J antennas.

In an embodiment, the J antennas of the UE cover the I receiving beam directions.

In an embodiment, the J antennas of the UE are able to perform the reference signal measurement in the X receiving beam directions simultaneously.

A third aspect of embodiments of the present invention provides an apparatus for information transmission, which is set in a user equipment (UE) and includes: a transceiver module configured to send capability information of the UE to a network device. The capability information is configured for the network device to determine a number n of rounds of reference signal measurements to be performed by the UE in I receiving beam directions, and one round of reference signal measurement includes one or more reference signal measurements in X receiving beam directions of J antennas. The J antennas cover the I receiving beam directions, J is a positive integer greater than 2, X is a positive integer less than or equal to J, and I is a positive integer greater than J.

In an embodiment, the capability information includes: a receiving beam coverage factor configured to indicate the number n of rounds.

In an embodiment, the number n of rounds is determined according to number of receiving beam directions associated with each antenna and number of receiving beam directions overlapping between the J antennas.

In an embodiment, in a case where J = 2, and each antenna is associated with r receiving beam directions, the number n of rounds is represented by:

$$n = r - Floor(m/2),$$

where n represents the number n of rounds of reference signal measurements, m represents number of receiving beam directions overlapping between the J antennas, and Floor() represents rounding down.

In an embodiment, the transceiver module is further configured to: receive a measurement configuration sent by the network device. The measurement configuration includes: a measurement duration for the reference signal measurements in the I receiving beam directions, and a beam scanning coefficient N for determining the measurement duration is determined based on the capability information.

In an embodiment, the beam scanning coefficient N is equal to the number n of rounds.

In an embodiment, the antenna includes: an antenna panel.

In an embodiment, the J antennas of the UE support respective reference signal measurements in the same or different receiving beam directions simultaneously.

In an embodiment, the UE includes the J antennas.

In an embodiment, the J antennas of the UE cover the I receiving beam directions.

In an embodiment, the J antennas of the UE are able to perform the reference signal measurement in the X receiving beam directions simultaneously.

A fourth aspect of embodiments of the present invention provides an apparatus for information transmission, which is set in a network device and includes: a transceiver module configured to receive capability information sent by a user equipment (UE). The capability information is configured to determine a number n of rounds of reference signal measurements to be performed by the UE in I receiving beam directions, and one round of reference signal measurement includes one or more reference signal measurements in X receiving beam directions of J antennas. The J antennas cover the I receiving beam directions, J is a positive integer greater than 2, X is a positive integer less than or equal to J, and I is a positive integer greater than J.

In an embodiment, the capability information includes: a receiving beam coverage factor configured to indicate the number n of rounds.

In an embodiment, the number n of rounds is determined according to number of receiving beam directions associated with each antenna and number of receiving beam directions overlapping between the J antennas.

In an embodiment, in a case where J = 2, and each antenna is associated with r receiving beam directions, the number n of rounds is represented by:

$$n = r - Floor(m/2),$$

where n represents the number n of rounds of reference signal measurements, m represents the number of receiving beam directions overlapping between the J antennas, and Floor() represents rounding down.

In an embodiment, the apparatus further includes: a processing module configured to determine a beam scanning coefficient N according to the capability information; and the processing module is further configured to determine a measurement duration for the UE to perform the reference signal measurements in the I receiving beam directions according to the beam scanning coefficient N.

In an embodiment, the beam scanning coefficient N is equal to the number n of rounds.

In an embodiment, the transceiver module is further configured to: send a measurement configuration to the UE. The measurement configuration at least includes: the measurement duration.

In an embodiment, the antenna includes: an antenna panel.

In an embodiment, the J antennas of the UE support respective reference signal measurements in the same or different receiving beam directions simultaneously.

In an embodiment, the UE includes the J antennas.

In an embodiment, the J antennas of the UE cover the I receiving beam directions.

In an embodiment, the J antennas of the UE are able to perform the reference signal measurement in the X receiving beam directions simultaneously.

A fifth aspect of embodiments of the present invention provides a communication device, which includes a processor, a transceiver, a memory, and an executable program stored in the memory and runnable by the processor. The processor is configured to perform the method for information transmission according to the first aspect or the second aspect when running the executable program.

A sixth aspect of embodiments of the present invention provides a computer storage medium having stored therein an executable program that, when executed by a processor, causes the method for information transmission according to the first aspect or the second aspect to be implemented.

With the method and apparatus for information transmission, the communication device and the storage medium provided by embodiments of the present invention, the UE sends the capability information of the UE to the network device, the capability information is configured for the network device to determine the number n of rounds of reference signal measurements to be performed by the UE in I receiving beam directions, one round of reference signal measurement includes one or more reference signal measurements in the X receiving beam directions of the J antennas, the J antennas cover the I receiving beam directions, J is the positive integer greater than 2, X is the positive integer less than or equal to J, and I is the positive integer greater than J. In this way, based on the capability information, the network device may determine the number of rounds of reference signal measurements required by the UE, which reduces a deviation in determining the number of rounds of reference signal measurements caused by UE's capability is unknown to the network device, thereby improving the accuracy of resource configuration by the network device.

It should be understood that both the foregoing general description and the following detailed description are illustrative and explanatory and are not restrictive of embodiments of the present invention.

## BRIEF DESCRIPTION OF THE DRAWINGS

The accompanying drawings, which are incorporated in and constitute a part of this specification, illustrate embodiments consistent with the present invention and, together with this specification, serve to explain the principles of embodiments of the present invention.

FIG. 1 is a schematic structural diagram showing a wireless communication system according to an illustrative embodiment;

FIG. 2 is a schematic diagram showing beamforming according to an illustrative embodiment;

FIG. 3 is a schematic flowchart showing information transmission according to an illustrative embodiment;

FIG. 4 is a schematic diagram showing beamforming according to an illustrative embodiment;

FIG. 5 is a schematic flowchart showing information transmission according to an illustrative embodiment;

FIG. 6 is a schematic flowchart showing information transmission according to an illustrative embodiment;

FIG. 7 is a schematic flowchart showing information transmission according to an illustrative embodiment;

FIG. 8 is a schematic flowchart showing information transmission according to an illustrative embodiment;

FIG. 9 is a schematic block diagram showing an apparatus for information transmission according to an illustrative embodiment;

FIG. 10 is a schematic block diagram showing an apparatus for information transmission according to an illustrative embodiment;

FIG. 11 is a schematic structural diagram showing a UE according to an illustrative embodiment; and

FIG. 12 is a schematic block diagram showing a communication device according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present invention. Instead, they are merely examples of apparatuses and methods consistent with some aspects of embodiments of the present invention.

Terms used in embodiments of the present invention are for the purpose of describing specific embodiments, but should not be construed to limit the present invention. As used in the present invention, "a/an", "said" and "the" in singular forms are intended to include plural forms, unless clearly indicated in the context otherwise. It should also be understood that the term "and/or" used herein represents and contains any one or any possible combinations of one or more associated items listed.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of the embodiments of the present invention. Depending on the context, the term "if" as used herein may be construed to mean "when" or "in a case where" or "in response to determining".

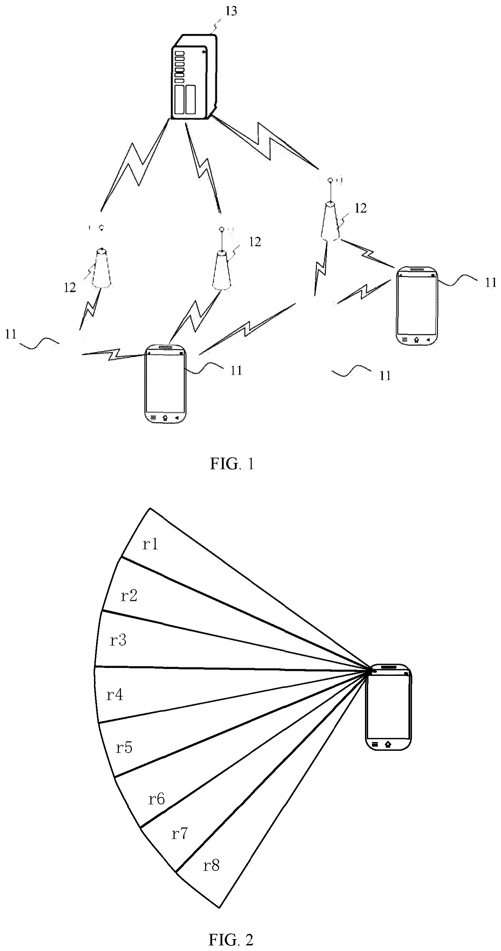

Referring to FIG. 1, FIG. 1 is a schematic structural diagram showing a wireless communication system according to embodiments of the present invention. As shown in FIG. 1, the wireless communication system is a communication system based on a cellular mobile communication technology, and may include several UEs 11 and several network devices 12.

The wireless communication system may be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN), or a MTC system.

The UE 11 may refer to a device that provides voice and/or data connectivity to a user. The UE 11 can communicate with one or more core networks via a radio access network (RAN). The UE 11 may be an Internet of Things UE, such as a sensor device, a mobile phone (or referred to as a "cellular" phone) and a computer with an Internet of Things UE. For example, the UE 11 may be a fixed, portable, pocket-sized, handheld, built-in computer or vehicle-mounted apparatus, such as a station (STA), a subscriber unit, a subscriber station, a mobile station, a mobile, a remote station, an access point, a remote UE (also referred to as a remote terminal), an access UE (also referred to as an access terminal), a user terminal, a user agent, a user device, or a user UE (also referred to as a user equipment, UE). Alternatively, the UE 11 may be a device of an unmanned aerial vehicle. Alternatively, the UE 11 may be a vehicle-mounted device, for example, an electronic control unit with a wireless communication function, or a wireless communication device externally connected with an electronic control unit. Alternatively, the UE 11 may be a roadside device, such as a street lamp, a signal lamp or other roadside devices with a wireless communication function.

The network device 12 may include an access network device. Optionally, the network device 12 may also include a core network device. The access network device may be an evolved access device (eNB) used in the 4G system. Alternatively, the access network device may also be an access device (gNB) adopting a central-allocated architecture in the 5G system. When adopting the central-allocated architecture, the access network device usually includes a central unit (CU) and at least two allocated units (DUs). The central unit is provided with protocol stacks of a packet data convergence protocol (PDCP) layer, a radio link control (RLC) layer and a media access control (MAC) layer. The allocated units are provided with a protocol stack of a physical (PHY) layer. The specific implementation of the access network device is not limited in the embodiments of the present invention.

A wireless connection may be established between the network device 12 and the UE 11 via a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

As shown in FIG. 2, a UE adopts a receiving beam scanning manner to achieve a better receiving angle coverage. Currently, in an FR2 frequency band, an antenna of the UE adopts 8 receiving beams covering a range of 120°. That is, the UE generates 8 beams through beamforming, and each beam points to one beam direction, achieving beam coverage of 120°. As shown in FIG. 2, r1 to r8 represent 8 receiving beams generated by the UE through the beamforming, and each receiving beam corresponds to one receiving beam direction.

In the 3GPP Release 16 (Rel-16), a UE capability indicated by simultaneousReceptionDiffTypeD-r16 is introduced, and simultaneousReceptionDiffTypeD-r16 is configured to indicate a capability of whether the UE can simultaneously receive reference signals with two different quasi co-location-type D (QCL-D) relationships. The UE may be configured with two antenna panels in FR2, and simultaneous signal reception with antenna arrays at different positions of the two antenna panels supports the terminal to implement the capability of simultaneousReceptionDiff-TypeD-r16 (i.e., the capability to simultaneously receive the reference signals with the two different QCL-D relationships). As shown in FIG. 2, each antenna panel basically adopts a solution of 8 receiving beams covering 120°. Simultaneous-ReceptionDiffTypeD-r16 can only indicate whether the UE can perform signal reception in different directions, but cannot give a clear indication on the actual capability of the UE, which leads to a corresponding ambiguous indication of the receiving capability of the UE, and a base station cannot accurately determine an actual situation of a multi-reception capability of the terminal. In practice, two antenna panels of the terminal, depending on different implementation solutions, may generate beams of three different cases: nonoverlapping, partially overlapping, and completely overlapping.

The current UE reporting cannot realize reporting of the actual antenna beam overlapping situation, and the base station cannot clearly determine the actual receiving capability of the UE, resulting in insufficient consideration by the base station in resource scheduling for the UE in such as reference signal measurement, and it may occur that the base station configures too much measurement time for UE, resulting in a waste of time domain resources.

Therefore, how to improve the resource configuration accuracy of the base station for UE based on the beamforming and improve resource utilization efficiency are urgent problems to be solved.

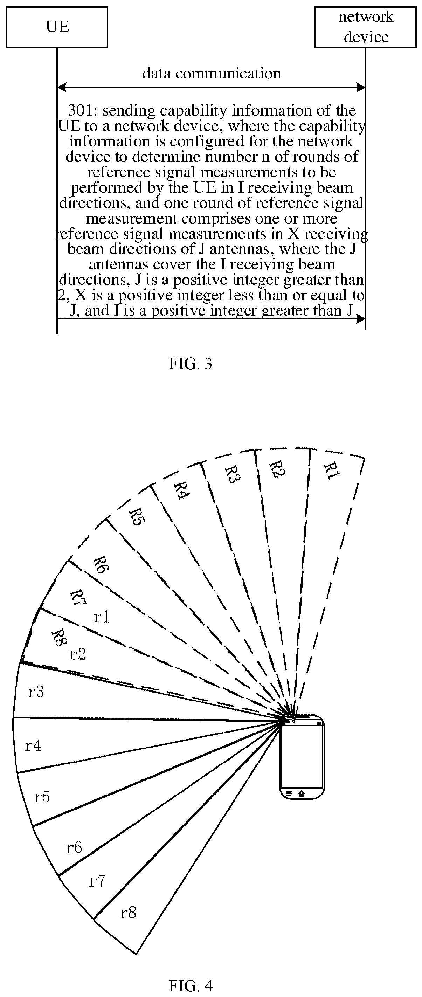

As shown in FIG. 3, embodiments of the present invention provide a method for information transmission, which is performed by a user equipment (UE) and includes the following step.

In step 301, capability information of the UE is sent to a network device. The capability information is used for the network device to determine a number n of rounds of reference signal measurements to be performed by the UE in I receiving beam directions, and one round of reference signal measurement includes one or more reference signal measurements in X receiving beam directions of J antennas. The J antennas cover the I receiving beam directions, J is a positive integer greater than 2, X is a positive integer less than or equal to J, and I is a positive integer greater than J.

In an embodiment, the UE includes the J antennas.

For example, J = 2, that is, the UE includes two antennas.

In an embodiment, the J antennas of the UE cover the I receiving beam directions.

For example, the UE includes two antennas, receiving beams of each antenna cover 8 receiving beam directions, and receiving beams of the two antennas cover 16 receiving beam directions.

For example, the UE includes two antennas, receiving beams of each antenna cover 8 receiving beam directions, and the two antennas have one overlapping receiving beam direction, so receiving beams of the two antennas cover 15 receiving beam directions. Similarly, there may exist other cases, which will not be elaborated one by one.

In an embodiment, the J antennas of the UE are able to perform the reference signal measurement in the X receiving beam directions simultaneously.

For example, the UE includes two antennas, and the two antennas may simultaneously perform the reference signal measurement for the same receiving beam direction, and in this case, X = 1. The two antennas may simultaneously perform the reference signal measurement for different receiving beam directions, and in this case, X = 2.

In an example, the antenna includes: an antenna panel. One antenna panel includes at least one antenna array, and each antenna array includes at least two antenna elements.

That is, the antenna of the UE may be the antenna panel. The antenna panel may include one or more antenna arrays. Beamforming is achieved through different antenna arrays. In a possible implementation, one antenna may form receiving beams in different directions by means of the beamforming. The UE may receive reference signals sent by the network device via multiple receiving beams obtained by the beamforming.

For example, one receiving beam may correspond to one receiving beam direction. In a possible implementation, the network device includes, but is not limited to, at least one of: an access network device (such as a base station); or a core network device.

The core network device may send the reference signal to the UE via the access network device.

In a possible implementation, the reference signal includes, but is not limited to, a synchronization signal block (SSB). The reference signal measurement may be a layer 1 reference signal received power (L1-RSRP) measurement for the SSB.

In one round of signal measurement, the J antennas may perform the reference signal measurement, respectively. In one round of signal measurement, receiving beam directions of the J antennas may be the same or different. Therefore, in one round of signal measurement, the J antennas may perform measurement in the X receiving beam directions, where X is greater than or equal to 1 and less than or equal to J. For example, when the receiving beam directions of the J antennas are the same in one round of signal measurement, X = 1; when the receiving beam directions of the J antennas are different in one round of signal measurement, X = J.

The UE may have the J antennas, and each antenna corresponds to K receiving beam directions. Since receiving beam directions of two antennas may overlap, the number I of receiving beam directions in which the UE may receive the reference signals is less than or equal to J*K. It may be understood that in a case where there exists an overlap between the receiving beam directions of the two antennas (for example, antenna A and antenna B) of the UE, for example, the receiving beam direction of one receiving beam of the antenna A is the same as the receiving beam direction of one receiving beam of the antenna B, only either antenna A or antenna B needs to perform measurement in this receiving beam direction to determine a measurement result of the reference signal in this receiving beam direction. Here, overlapping of the receiving beam directions means overlapping of the receiving beams. The overlapping of the receiving beam directions may be that a difference in the receiving beam directions is less than a predetermined threshold.

In some embodiments, the UE may have the J (for example, J = 2) antennas, and each antenna corresponds to the K (for example, K = 8) receiving beam directions. Since the receiving beam directions of the two antennas may overlap, the number I of receiving beam directions in which the UE may receive the reference signals is less than or equal to J*K, for example, I = 14.

The UE needs to perform one or more rounds of signal measurements to complete signal measurements in the I receiving beam directions. In each round, the X receiving beam directions are measured, so X is less than or equal to I. For example, as shown in FIG. 4, the UE includes two antennas (antenna 1 and antenna 2, where the antenna 1 corresponds to beams r1 to r8, and the antenna 2 corresponds to beams R1 to R8), and each antenna corresponds to 8 receiving beam directions. The two antennas have two overlapping receiving beam directions (for example, the receiving beam direction of the receiving beam r2 of the antenna 1 overlaps with that of the receiving beam R8 of the antenna 2, and the receiving beam direction of the receiving beam r1 of the antenna 1 overlaps with that of the receiving beam R7 of the antenna 2), so the number I of receiving beam directions in which the UE may actually receive the reference signals is 14, that is, I is less than the total number 16 of beams of the two antennas.

In a possible implementation, the UE is capable of simultaneously receiving multiple reference signals with different QCL-D relationships.

In a possible implementation, the UE is not capable of simultaneously receiving multiple reference signals with different QCL-D relationships.

Here, the reference signals with different QCL-D relationships may include reference signals in different receiving beam directions.

In a possible implementation, one round of reference signal measurement includes multiple reference signal measurements performed simultaneously. One reference signal measurement may correspond to one antenna.

In an embodiment, the J antennas of the UE support respective reference signal measurements in the same or different receiving beam directions simultaneously.

In a possible implementation, one round of reference signal measurement includes one or more reference signal measurements performed by the J antennas simultaneously in the X receiving beam directions.

For example, as shown in FIG. 4, the UE may adopt two antennas to perform the reference signal measurement in two receiving beam directions simultaneously. For example, the UE may adopt the antenna 1 and the antenna 2 to simultaneously receive a reference signal in a receiving beam direction r8 and a reference signal in a receiving beam direction R1. Alternatively, the UE may adopt the antenna 1 to receive a reference signal in a receiving beam direction r2, and simultaneously adopt the antenna 2 to receive a reference signal in a receiving beam direction R7.

In some embodiments, the factor affecting the number n of rounds of reference signal measurements to be performed by the UE in the I receiving beam directions may include, but is not limited to, at least one of:

whether there are receiving beams overlapping between the J antennas; where receiving beam directions of the overlapping receiving beams overlap;

the number of receiving beams overlapping between the J antennas; or

whether the UE supports a capability to simultaneously receive reference signals with different QCL-D relationships.

Here, overlapping of receiving beams may be overlapping of receiving beam directions. Whether the receiving beam directions overlap may be determined according to a difference between the receiving beam directions. For example, in a case where a difference between two receiving beam directions of the two receiving beams is less than a threshold, the two receiving beam directions overlap; otherwise, it is determined that the two receiving beam directions do not overlap.

In a possible implementation, in a case where J is greater than 3, the number of receiving beams overlapping between the J antennas may include at least one of: the number of receiving beams overlapping between two antennas; or the number of receiving beams overlapping among more than two antennas.

In a possible implementation, overlapping of receiving beam directions may include: overlapping of beam coverage ranges.

In a possible implementation, the receiving beams have the same broadcasting angle, so when the receiving beam directions overlap, the beam coverage ranges also overlap.

The UE may determine the number n of rounds of reference signal measurements to be performed by the UE in the I receiving beam directions based on the above factors.

For example, as shown in FIG. 4, the receiving beam direction r2 of the antenna 1 overlaps with the receiving beam direction R8 of the antenna 2, the receiving beam direction r1 of the antenna 1 overlaps with the receiving beam direction R7 of the antenna 2, and the UE has the capability to simultaneously receive reference signals with two different QCL-D relationships. Therefore, in one round of reference signal measurement, the UE may measure reference signals in two receiving beam directions. The UE may complete the reference signal measurements in the 14 receiving beam directions as shown in FIG. 4 via 7 rounds of reference signal measurements.

The UE may send the capability information to the network device, so that the network device may determine the number n of rounds of reference signal measurements.

In a possible implementation, the capability information is used by the network device to indirectly determine the number n of rounds of reference signal measurements. For example, the capability information indicates the above determination factors, and the number n of rounds of reference signal measurements is calculated by the network device based on the determination factors.

In an embodiment, the capability information includes: a receiving beam coverage factor (below also called coverage factor for short) configured to indicate the number n of rounds. The coverage factor is associated with the number of receiving beam directions overlapping between the J antennas.

Here, the coverage factor represents the number of rounds of signal measurements that need to be performed by the UE to complete the reference signal measurements in the I receiving beam directions. Here, the name of the coverage factor is not limited.

The UE may directly indicate the number n of rounds to the network device via the capability information. In this way, the amount of transmitted data may be reduced, a signaling load may be lowered, and a load on the network device caused by calculating the number n of rounds based on the determination factors may also be reduced.

In a possible implementation, the coverage factor may adopt "Beamoverlapscalingfactor".

The coverage factor will be explained below with reference to examples where the UE has two antennas, and each antenna corresponds to 8 receiving directions. The UE may send Beamoverlapscalingfactor to the network device. For example, by default, Beamoverlapscalingfactor = 8, indicating that a terminal needs to perform 8 rounds of SSB measurements (for each round of SSB measurement, the two antennas perform the measurement simultaneously) to complete the SSB-based L1-RSRP measurements. This means that the two antenna panels of the UE do not have overlap in the receiving beams (i.e., a total of 16 beam directions need to be measured).

For example, Beamoverlapscalingfactor = 4. The 8 beams of one of the two antennas of the terminal completely overlap with the 8 beams of the other one of the two antennas of the terminal (i.e., a total of 8 beam directions need to be measured). The UE may complete the SSB-based L1-RSRP measurements of all receiving beams in 4 rounds of SSB measurements (for each round of SSB measurement, the two antennas simultaneously perform SSB measurements in different receiving beam directions).

In this way, based on the capability information, the network device may determine the number of rounds of reference signal measurements required by the UE, which reduces a deviation in determining the number of rounds of reference signal measurements caused by UE's capability is unknown to the network device, thereby improving the accuracy of resource configuration by the network device.

In an embodiment, the number n of rounds is determined according to the number of receiving beam directions associated with each antenna and the number of receiving beam directions overlapping between the J antennas.

In a possible implementation, the number n of rounds is positively correlated with the number of receiving beam directions associated with each antenna.

The more the number of receiving beam directions associated with each antenna, the more the number n of rounds required for measurement.

In a possible implementation, the number n of rounds is negatively correlated with the number of receiving beam directions overlapping between the J antennas.

The more the number of receiving beam directions overlapping between the J antennas, the fewer the number n of rounds required for measurement.

In an embodiment, in a case where J = 2, and each antenna is associated with r receiving beam directions, the number n of rounds is represented by expression (1):

$$n = r - Floor(m/2) \qquad\qquad (1)$$

where n represents the number n of rounds of reference signal measurements (i.e., the coverage factor), m represents the number of receiving beam directions overlapping between the J antennas, and Floor() represents rounding down.

Here, the UE has the capability to simultaneously receive reference signals with two different QCL-D relationships, that is, in one round of reference signal measurement, the UE may measure reference signals in two receiving beam directions.

Here, m may represent the number of receiving beams of one antenna that overlap with receiving beams of another antenna.

In an overlapping receiving beam direction, only one antenna needs to perform the reference signal measurement to determine the measurement result.

For example, one antenna corresponds to 8 receiving beam directions, that is, r = 8.

In a case where m is 2, that is, as shown in FIG. 4, the number of receiving beam directions of one antenna that have an overlapping relationship with receiving beam directions of another antenna is 2. The UE may complete reference signal measurements in the 14 receiving beam directions as shown in FIG. 4 via 7 rounds of reference signal measurements.

Similarly:

The number of receiving beam directions of one antenna that overlap with receiving beam directions of another antenna is 1, i.e., m = 1, and the UE needs to perform 8 rounds of reference signal measurements to determine a measurement result of 15 beam directions.

The number of receiving beam directions of one antenna that overlap with receiving beam directions of another antenna is 2, i.e., m = 2, and the UE needs to perform 7 rounds of reference signal measurements to determine a measurement result of 14 beam directions.

The number of receiving beam directions of one antenna that overlap with receiving beam directions of another antenna is 3, i.e., m = 3, and the UE needs to perform 7 rounds of reference signal measurements to determine a measurement result of 13 beam directions.

The number of receiving beam directions of one antenna that overlap with receiving beam directions of another antenna is 4, i.e., m = 4, and the UE needs to perform 6 rounds of reference signal measurements to determine a measurement result of 12 beam directions.

The number of receiving beam directions of one antenna that overlap with receiving beam directions of another antenna is 5, i.e., m = 5, and the UE needs to perform 6 rounds of reference signal measurements to determine a measurement result of 11 beam directions.

The number of receiving beam directions of one antenna that overlap with receiving beam directions of another antenna is 6, i.e., m = 6, and the UE needs to perform 5 rounds of reference signal measurements to determine a measurement result of 10 beam directions.

The number of receiving beam directions of one antenna that overlap with receiving beam directions of another antenna is 7, i.e., m = 7, and the UE needs to perform 5 rounds of reference signal measurements to determine a measurement result of 9 beam directions.

The number of receiving beam directions of one antenna that overlap with receiving beam directions of another antenna is 8, i.e., m = 8, and the UE needs to perform 4 rounds of reference signal measurements to determine a measurement result of 8 beam directions.

In a possible implementation, the coverage factor may be the number of receiving beam directions overlapping between the J antennas. The network device may determine the number n of rounds of reference signal measurements to be performed by the UE in the I receiving beam directions according to the coverage factor. The way in which the network device determines the number n of rounds may be similar to the way in which the UE determines the number n of rounds, which will not be described in detail here.

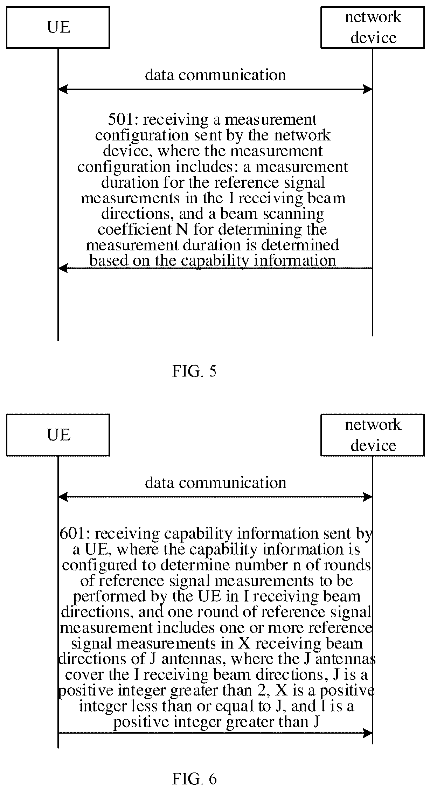

As shown in FIG. 5, embodiments of the present invention provide a method for information transmission, which is performed by a user equipment (UE) and includes the following step.

In step 501, a measurement configuration sent by the network device is received. The measurement configuration includes: a measurement duration for the reference signal measurements in the I receiving beam directions, and a beam scanning coefficient N for determining the measurement duration is determined based on the capability information.

The network device determines the number n of rounds of reference signal measurements to be performed by the UE in the I receiving beam directions according to the received capability information.

The network device may determine the beam scanning coefficient N according to the number n of rounds.

The beam scanning coefficient N may be used to calculate the measurement duration.

In a possible implementation, the number n of rounds is positively correlated with the beam scanning coefficient N.

In an embodiment, the beam scanning coefficient N is equal to the number n of rounds.

In a possible implementation, the beam scanning coefficient N may be a calculation parameter used in a calculation rule for calculating the measurement duration.

In a possible implementation, the beam scanning coefficient N is positively correlated with the measurement duration.

The network device may calculate the measurement duration based on the beam scanning coefficient N.

The network device determines the number n of rounds of reference signal measurements based on the capability information, determines the beam scanning coefficient N according to the number n of rounds, and further determines the measurement duration, thereby improving a matching degree between the measurement duration and the reference signal measurement performed by the UE, and improving the accuracy of resource configuration.

The network device may indicate the measurement configuration to the UE, so that the UE may determine a time domain resource, such as the measurement duration, for performing the reference signal measurement.

In a possible implementation, the network device may send the reference signals within the measurement duration for the UE to perform measurements in the I receiving beam directions within the measurement duration.

For example, after receiving the receiving beam coverage factor reported by the terminal, the network device configures the beam scanning coefficient N = Beamoverlapscalingfactor associated with the measurement duration of the SSB-based L1-RSRP for the terminal.

The UE measures the L1-RSRP of the SSB according to the measurement duration indicated by the network device and reports a measurement result. After obtaining the corresponding measurement result of the L1-RSRP, the network device may select the best beam for subsequent transmission scheduling.

As shown in FIG. 6, embodiments of the present invention provide a method for information transmission, which is performed by a network device and includes the following step.

In step 601, capability information sent by a UE is received. The capability information is configured to determine a number n of rounds of reference signal measurements to be performed by the UE in I receiving beam directions, and one round of reference signal measurement includes one or more reference signal measurements in X receiving beam directions of J antennas. The J antennas cover the I receiving beam directions, J is a positive integer greater than 2, X is a positive integer less than or equal to J, and I is a positive integer greater than J.

In an embodiment, the UE includes the J antennas.

For example, J = 2, that is, the UE includes two antennas.

In an embodiment, the J antennas of the UE cover the I receiving beam directions.

For example, the UE includes two antennas, receiving beams of each antenna cover 8 receiving beam directions, and receiving beams of the two antennas cover 16 receiving beam directions.

For example, the UE includes two antennas, receiving beams of each antenna cover 8 receiving beam directions, and the two antennas have one overlapping receiving beam direction, so receiving beams of the two antennas cover 15 receiving beam directions. Similarly, there may exist other cases, which will not be elaborated one by one.

In an embodiment, the J antennas of the UE are able to perform the reference signal measurement in the X receiving beam directions simultaneously.

For example, the UE includes two antennas, and the two antennas may simultaneously perform the reference signal measurement for the same receiving beam direction, and in this case, X = 1. The two antennas may simultaneously perform the reference signal measurement for different receiving beam directions, and in this case, X = 2.

In an example, the antenna includes: an antenna panel. One antenna panel includes at least one antenna array, and each antenna array includes at least two antenna elements.

That is, the antenna of the UE may be the antenna panel. The antenna panel may include one or more antenna arrays. Beamforming is achieved through different antenna arrays.

In a possible implementation, one antenna may form receiving beams in different directions by means of the beamforming. The UE may receive reference signals sent by the network device via multiple receiving beams obtained by the beamforming.

Here, one receiving beam may correspond to one receiving beam direction.

In a possible implementation, the network device includes, but is not limited to, at least one of: an access network device (such as a base station); or a core network device.

The core network device may send the reference signal to the UE via the access network device.

In a possible implementation, the reference signal includes, but is not limited to, SSB. The reference signal measurement may be L1-RSRP measurement for the SSB.

In one round of signal measurement, the J antennas may perform the reference signal measurement, respectively. In one round of signal measurement, receiving beam directions of the J antennas may be the same or different. Therefore, in one round of signal measurement, the J antennas may perform measurement in the X receiving beam directions, where X is greater than or equal to 1 and less than or equal to J. For example, when the receiving beam directions of the J antennas are the same in one round of signal measurement, X = 1; when the receiving beam directions of the J antennas are different in one round of signal measurement, X = J.

The UE may have the J antennas, and each antenna corresponds to K receiving beam directions. Since receiving beam directions of two antennas may overlap, the number I of receiving beam directions in which the UE may receive the reference signals is less than or equal to J*K. That is, it may be understood that in a case where there exists an overlap in a receiving beam direction of the two antennas (for example, antenna A and antenna B) of the UE, for example, the receiving beam direction of one receiving beam of the antenna A is the same as the receiving beam direction of one receiving beam of the antenna B, only either antenna A or antenna B needs to perform measurement in this receiving beam direction to determine a measurement result of the reference signal in this receiving beam direction. Here, overlapping of the receiving beam directions means overlapping of the receiving beams. The overlapping of the receiving beam directions may be that a difference in the receiving beam directions is less than a predetermined threshold.

In some embodiments, the UE may have the J (for example, J = 2) antennas, and each antenna corresponds to the K (for example, K = 8) receiving beam directions. Since the receiving beam directions of the two antennas may overlap, the number I of receiving beam directions in which the UE may receive the reference signals is less than or equal to J*K, for example, I = 14.

The UE needs to perform one or more rounds of signal measurements to complete signal measurements in the I receiving beam directions. In each round, the X receiving beam directions are measured, so X is less than or equal to I.

For example, as shown in FIG. 4, the UE includes two antennas (antenna 1 and antenna 2, where the antenna 1 corresponds to beams r1 to r8, and the antenna 2 corresponds to beams R1 to R8), and each antenna corresponds to 8 receiving beam directions. The two antennas have two overlapping receiving beam directions (for example, the receiving beam direction of the receiving beam r2 of the antenna 1 overlaps with that of the receiving beam R8 of the antenna 2, and the receiving beam direction of the receiving beam r1 of the antenna 1 overlaps with that of the receiving beam R7 of the antenna 2), so the number I of receiving beam directions in which the UE may actually receive the reference signals is 14, that is, I is less than the total number 16 of beams of the two antennas.

In a possible implementation, the UE is capable of simultaneously receiving multiple reference signals with different QCL-D relationships.

In a possible implementation, the UE is not capable of simultaneously receiving multiple reference signals with different QCL-D relationships.

Here, the reference signals with different QCL-D relationships may include reference signals in different receiving beam directions.

In a possible implementation, one round of reference signal measurement includes multiple reference signal measurements performed simultaneously. One reference signal measurement may correspond to one antenna.

In an embodiment, the J antennas of the UE support respective reference signal measurements in the same or different receiving beam directions simultaneously.

In a possible implementation, one round of reference signal measurement includes one or more reference signal measurements performed by the J antennas simultaneously in the X receiving beam directions.

For example, as shown in FIG. 4, the UE may simultaneously adopt two antennas to perform the reference signal measurement in two receiving beam directions simultaneously. For example, the UE may simultaneously adopt the antenna 1 and the antenna 2 to respectively receive a reference signal in a receiving beam direction r8 and a reference signal in a receiving beam direction R1 simultaneously. Alternatively, the UE may adopt the antenna 1 to receive a reference signal in a receiving beam direction r2, and simultaneously adopt the antenna 2 to receive a reference signal in a receiving beam direction R7.

In some embodiments, the factor affecting the number n of rounds of reference signal measurements to be performed by the UE in the I receiving beam directions may include, but is not limited to, at least one of:

whether there are receiving beams overlapping between the J antennas; where receiving beam directions of the overlapping receiving beams overlap;

the number of receiving beams overlapping between the J antennas; or

whether the UE supports a capability to simultaneously receive reference signals with different QCL-D relationships.

Here, overlapping of receiving beams may be overlapping of receiving beam directions. Whether the receiving beam directions overlap may be determined according to a difference between the receiving beam directions. For example, in a case where a difference between two receiving beam directions of the two receiving beams is less than a threshold, the two receiving beam directions overlap; otherwise, it is determined that the two receiving beam directions do not overlap.

In a possible implementation, in a case where J is greater than 3, the number of receiving beams overlapping between the J antennas may include at least one of: the number of receiving beams overlapping between two antennas; or the number of receiving beams overlapping among more than two antennas.

In a possible implementation, overlapping of receiving beam directions may include: overlapping of beam coverage ranges.

In a possible implementation, the receiving beams have the same broadcasting angle, so when the receiving beam directions overlap, the beam coverage ranges also overlap.

The UE may determine the number n of rounds of reference signal measurements to be performed by the UE in the I receiving beam directions based on the above factors.

For example, as shown in FIG. 4, the receiving beam direction r2 of the antenna 1 overlaps with the receiving beam direction R8 of the antenna 2, the receiving beam direction r1 of the antenna 1 overlaps with the receiving beam direction R7 of the antenna 2, and the UE has the capability to simultaneously receive reference signals with two different QCL-D relationships. Therefore, in one round of reference signal measurement, the UE may measure reference signals in two receiving beam directions. The UE may complete the reference signal measurements in the 14 receiving beam directions as shown in FIG. 4 via 7 rounds of reference signal measurements.

The UE may send the capability information to the network device, so that the network device may determine the number n of rounds of reference signal measurements.

In a possible implementation, the capability information is used by the network device to indirectly determine the number n of rounds of reference signal measurements. For example, the capability information indicates the above determination factors, and the number n of rounds of reference signal measurements is calculated by the network device based on the determination factors.

In an embodiment, the capability information includes: a receiving beam coverage factor configured to indicate the number n of rounds. The coverage factor is associated with the number of receiving beam directions overlapping between the J antennas.

Here, the coverage factor represents the number of rounds of signal measurements indicated by the UE to the network device that need to be performed by the UE to complete the reference signal measurements in the I receiving beam directions. Here, the name of the coverage factor is not limited.

The UE may directly indicate the number n of rounds to the network device via the capability information. In this way, the amount of transmitted data may be reduced, a signaling load may be lowered, and a load on the network device caused by calculating the number n of rounds based on the determination factors may also be reduced.

In a possible implementation, the coverage factor may adopt "Beamoverlapscalingfactor".

The coverage factor will be explained below with reference to examples where the UE has two antennas, and each antenna corresponds to 8 receiving directions. The UE may send Beamoverlapscalingfactor to the network device.

For example, Beamoverlapscalingfactor = 4. The 8 beams of one of the two antennas of the terminal completely overlap with the 8 beams of the other one of the two antennas of the terminal (i.e., a total of 8 beam directions need to be measured). The UE may complete the SSB-based L1-RSRP measurements of all receiving beams in 4 rounds of SSB measurements (for each round of SSB measurement, the two antennas simultaneously perform SSB measurements in different receiving beam directions).

In this way, based on the capability information, the network device may determine the number of rounds of reference signal measurements required by the UE, which reduces a deviation in determining the number of rounds of reference signal measurements caused by UE's capability is unknown to the network device, thereby improving the accuracy of resource configuration by the network device.

In an embodiment, the number n of rounds is determined according to the number of receiving beam directions associated with each antenna and the number of receiving beam directions overlapping between the J antennas.

In a possible implementation, the number n of rounds is positively correlated with the number of receiving beam directions associated with each antenna.

The more the number of receiving beam directions associated with each antenna, the more the number n of rounds required for measurement.

In a possible implementation, the number n of rounds is negatively correlated with the number of receiving beam directions overlapping between the J antennas.

The more the number of receiving beam directions overlapping between the J antennas, the fewer the number n of rounds required for measurement.

In an embodiment, in a case where J = 2, and each antenna is associated with r receiving beam directions, the number n of rounds is represented by expression (1); where n represents the number n of rounds of reference signal measurements (i.e., the coverage factor), m represents the number of receiving beam directions overlapping between the J antennas, and Floor() represents rounding down.

Here, the UE has the capability to simultaneously receive reference signals with two different QCL-D relationships, that is, in one round of reference signal measurement, the UE may measure reference signals in two receiving beam directions.

Here, m may represent the number of receiving beam directions of one antenna that overlap with receiving beam directions of another antenna.

In an overlapping receiving beam direction, only one antenna needs to perform the reference signal measurement to determine the measurement result.

For example, one antenna corresponds to 8 receiving beam directions, that is, r = 8.

In a case where m is 2, that is, as shown in FIG. 4, the number of receiving beam directions of one antenna that have an overlapping relationship with receiving beam directions of another antenna is 2. The UE may complete reference signal measurements in the 14 receiving beam directions as shown in FIG. 4 via 7 rounds of reference signal measurements.

Similarly:

The number of receiving beam directions of one antenna that overlap with receiving beam directions of another antenna is 1, i.e., m = 1, and the UE needs to perform 8 rounds of reference signal measurements to determine a measurement result of 15 beam directions.

The number of receiving beam directions of one antenna that overlap with receiving beam directions of another antenna is 2, i.e., m = 2, and the UE needs to perform 7 rounds of reference signal measurements to determine a measurement result of 14 beam directions.

The number of receiving beam directions of one antenna that overlap with receiving beam directions of another antenna is 3, i.e., m = 3, and the UE needs to perform 7 rounds of reference signal measurements to determine a measurement result of 13 beam directions.

The number of receiving beam directions of one antenna that overlap with receiving beam directions of another antenna is 4, i.e., m = 4, and the UE needs to perform 6 rounds of reference signal measurements to determine a measurement result of 12 beam directions.

The number of receiving beam directions of one antenna that overlap with receiving beam directions of another antenna is 5, i.e., m = 5, and the UE needs to perform 6 rounds of reference signal measurements to determine a measurement result of 11 beam directions.

The number of receiving beam directions of one antenna that overlap with receiving beam directions of another antenna is 6, i.e., m = 6, and the UE needs to perform 5 rounds of reference signal measurements to determine a measurement result of 10 beam directions.

The number of receiving beam directions of one antenna that overlap with receiving beam directions of another antenna is 7, i.e., m = 7, and the UE needs to perform 5 rounds of reference signal measurements to determine a measurement result of 9 beam directions.

The number of receiving beam directions of one antenna that overlap with receiving beam directions of another antenna is 8, i.e., m = 8, and the UE needs to perform 4 rounds of reference signal measurements to determine a measurement result of 8 beam directions.

In a possible implementation, the coverage factor may be the number of receiving beam directions overlapping between the J antennas. The network device may determine the number n of rounds of reference signal measurements to be performed by the UE in the I receiving beam directions according to the coverage factor. The way in which the network device determines the number n of rounds may be similar to the way in which the UE determines the number n of rounds, which will not be described in detail here.

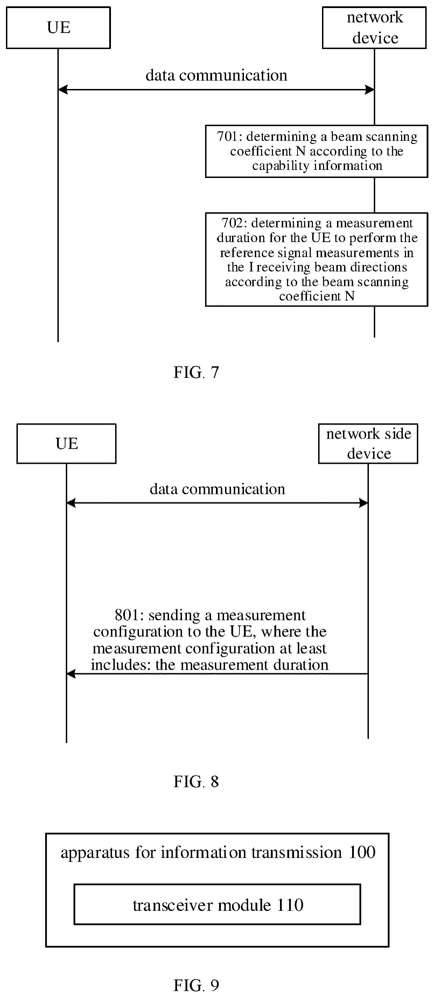

As shown in FIG. 7, embodiments of the present invention provide a method for information transmission, which is performed by a network device and includes the following steps.

In step 701, a beam scanning coefficient N is determined according to the capability information.

In step 702, a measurement duration for the UE to perform the reference signal measurements in the I receiving beam directions is determined according to the beam scanning coefficient N.

The network device determines the number n of rounds of reference signal measurements to be performed by the UE in the I receiving beam directions according to the received capability information.

The network device may determine the beam scanning coefficient N according to the number n of rounds.

The beam scanning coefficient N may be used to calculate the measurement duration.

In a possible implementation, the number n of rounds is positively correlated with the beam scanning coefficient N.

In an embodiment, the beam scanning coefficient N is equal to the number n of rounds.

In a possible implementation, the beam scanning coefficient N may be a calculation parameter used in a calculation rule for calculating the measurement duration.

In a possible implementation, the beam scanning coefficient N is positively correlated with the measurement duration.

The network device may calculate the measurement duration based on the beam scanning coefficient N.

In an example, the beam scanning coefficient N is equal to the number n of rounds.

The network device determines the number n of rounds of reference signal measurements based on the capability information, determines the beam scanning coefficient N according to the number n of rounds, and further determines the measurement duration, thereby improving a matching degree between the measurement duration and the reference signal measurement performed by the UE, and improving the accuracy of resource configuration.

As shown in FIG. 8, embodiments of the present invention provide a method for information transmission, which is performed by a network device and includes the following step.

In step 801, a measurement configuration is sent to the UE. The measurement configuration at least includes: the measurement duration.

The network device may indicate the measurement configuration to the UE, so that the UE may determine a time domain resource, such as the measurement duration, for performing the reference signal measurement.

In a possible implementation, the network device may send the reference signals within the measurement duration for the UE to perform measurements in the I receiving beam directions within the measurement duration.

For example, after receiving the receiving beam coverage factor reported by the terminal, the network device configures the beam scanning coefficient N = Beamoverlapscalingfactor associated with the measurement duration of the SSB-based L1-RSRP for the terminal.

The UE measures the L1-RSRP of the SSB according to the measurement duration indicated by the network device and reports a measurement result. After obtaining the corresponding measurement result of the L1-RSRP, the network device may select the best beam for subsequent transmission scheduling.

Specific examples are provided below in combination with any of the above embodiments:
The terminal reports a coverage factor configured for an antenna thereof, and the network performs transmission and measurement scheduling for the terminal according to a corresponding capability.

Example 1:

The terminal reports, according to its own capability, a receiving beam coverage factor Beamoverlapscalingfactor configured for the antenna.

The value of Beamoverlapscalingfactor is selected from [4, 5, 6, 7, 8], each value of which corresponds to the time of a respective one of 4 to 8 rounds of SSB measurements performed by the terminal, respectively.

By default, Beamoverlapscalingfactor = 8, that is, there is no overlap between the receiving beams of the terminal, and the terminal needs to perform 8 rounds of SSB measurements to complete the SSB-based L1-RSRP measurement.

In a case where Beamoverlapscalingfactor = 4, two antenna panels of the terminal fully overlap, and the terminal may complete the SSB-based L1-RSRP measurement of all receiving beams by 4 rounds of SSB measurements.

Example 2:

After receiving the receiving beam coverage factor reported by the terminal, the network configures the beam scanning coefficient N = Beamoverlapscalingfactor for the measurement time of the SSB-based L1-RSRP measurement for the terminal. Before completing L1-RSRP measurement reporting, the network cannot obtain the L1-RSRP measurement result of the terminal, and only after obtaining the corresponding L1-RSRP measurement result may the network select the best beam for subsequent transmission scheduling.

As shown in FIG. 9, embodiments of the present invention provide an apparatus 100 for information transmission, which is set in a user equipment (UE) and includes: a transceiver module 110 configured to send capability information. The capability information is configured for a network device to determine a number n of rounds of reference signal measurements to be performed by the UE in I receiving beam directions, and one round of reference signal measurement includes one or more reference signal measurements in X receiving beam directions of J antennas. The J antennas cover the I receiving beam directions, J is a positive integer greater than 2, X is a positive integer less than or equal to J, and I is a positive integer greater than J.

In an embodiment, the capability information includes: a receiving beam coverage factor configured to indicate the number n of rounds.

In an embodiment, in a case where J = 2, and each antenna is associated with r receiving beam directions, the number n of rounds is represented by:

$$n = r - Floor(m/2)$$

where n represents the number n of rounds of reference signal measurements, m represents number of receiving beam directions overlapping between the J antennas, and Floor() represents rounding down.

In an embodiment, the transceiver module is further configured to: receive a measurement configuration sent by the network device. The measurement configuration includes: a measurement duration for the reference signal measurements in the I receiving beam directions, and a beam scanning coefficient N for determining the measurement duration is determined based on the capability information.

In an embodiment, the beam scanning coefficient N is equal to the number n of rounds.

In an embodiment, the antenna includes: an antenna panel.

In an embodiment, the J antennas of the UE support respective reference signal measurements in the same or different receiving beam directions simultaneously.

In an embodiment, the UE includes the J antennas.

In an embodiment, the J antennas of the UE cover the I receiving beam directions.

In an embodiment, the J antennas of the UE are able to perform the reference signal measurement in the X receiving beam directions simultaneously.

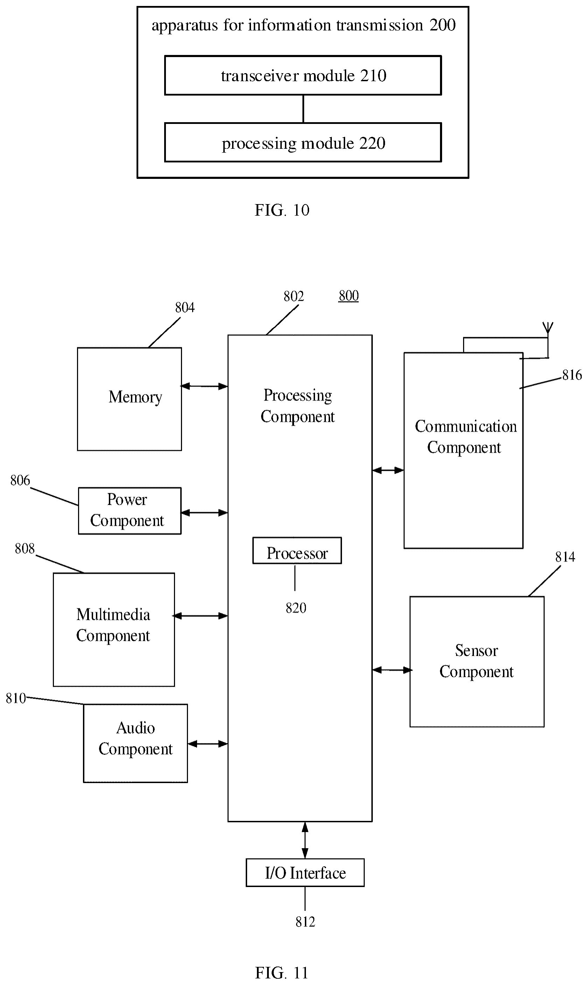

As shown in FIG. 10, embodiments of the present invention provide an apparatus 200 for information transmission, which is set in a network device and includes: a transceiver module 210 configured to receive capability information. The capability information is configured to determine a number n of rounds of reference signal measurements to be performed by a user equipment (UE) in I receiving beam directions, and one round of reference signal measurement includes one or more reference signal measurements in X receiving beam directions of J antennas. The J antennas cover the I receiving beam directions, J is a positive integer greater than 2, X is a positive integer less than or equal to J, and I is a positive integer greater than J.

In an embodiment, the capability information includes: a receiving beam coverage factor configured to indicate the number n of rounds.

In an embodiment, in a case where J = 2, and each antenna is associated with r receiving beam directions, the number n of rounds is represented by:

$$n = r - Floor(m/2)$$

where n represents the number n of rounds of reference signal measurements, m represents the number of receiving beam directions overlapping between the J antennas, and Floor() represents rounding down.

In an embodiment, the apparatus further includes: a processing module 220 configured to determine a beam scanning coefficient N according to the capability information; and the processing module is further configured to determine a measurement duration for the UE to perform the reference signal measurements in the I receiving beam directions according to the beam scanning coefficient N.

In an embodiment, the beam scanning coefficient N is equal to the number n of rounds.

In an embodiment, the transceiver module is further configured to: send a measurement configuration to the UE. The measurement configuration at least includes: the measurement duration.

In an embodiment, the antenna includes: an antenna panel.

In an embodiment, the J antennas of the UE support respective reference signal measurements in the same or different receiving beam directions simultaneously.

In an embodiment, the UE includes the J antennas.

In an embodiment, the J antennas of the UE cover the I receiving beam directions.

In an embodiment, the J antennas of the UE are able to perform the reference signal measurement in the X receiving beam directions simultaneously.

Embodiments of the present invention provide a communication device, which includes: a memory for storing instructions executable by a processor; and a processor connected to the memory. The processor is configured to perform the method for information transmission according to any of the aforementioned technical solutions.

The processor may include various types of storage media, including non-temporary computer storage media that still may memorize information stored thereon after the communication device powers off.

Here, the communication device includes: a UE or a network element, and the network element may be any one of the first network element to the fourth network element described above.

The processor may be connected to the memory via a bus or the like, and is configured to read an executable program stored in the memory, for example, at least one of the methods shown in FIG. 3 to FIG. 8.

FIG. 11 is a block diagram showing a UE 800 according to an illustrative embodiment. For example, the UE 800 may be a mobile phone, a computer, a digital broadcast user equipment, a messaging device, a game console, a tablet device, a medical device, a fitness device, a personal digital assistant, or the like.

Referring to FIG. 11, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 can access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above method.

In an illustrative embodiment, there is also provided a non-transitory computer readable storage medium including instructions, such as included in the memory 804, executable by the processor 820 in the UE 800, for performing the above method. For example, the non-transitory computer-readable storage medium may be a ROM, a random access memory (RAM), a CD-ROM, a magnetic tape, a floppy disc, an optical data storage device, and the like.

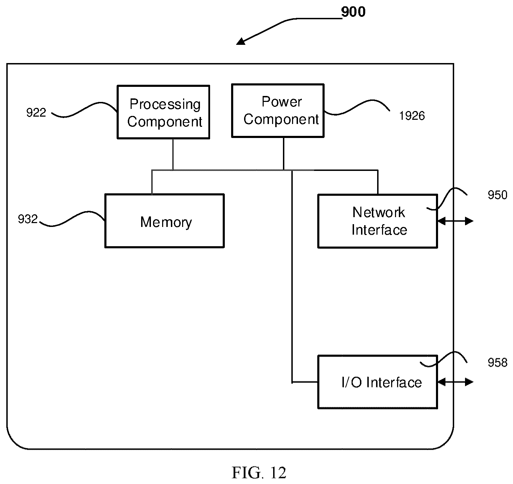

As shown in FIG. 12, an embodiment of the present invention shows a structure of an access device. For example, a communication device 900 may be provided as a network device. The communication device may be various network elements such as the aforementioned access network elements and/or network function.

Referring to FIG. 12, the communication device 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute any of the aforementioned methods applied to the access device, for example, the method shown in any one of FIG. 4 to FIG. 9.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server TM, Mac OS XTM, UnixTM, LinuxTM, FreeBSD TM or the like.

In an absence of contradiction, each step in an above certain implementation or embodiment may be implemented as an independent embodiment, and the steps may be arbitrarily combined. For example, a solution after removing some steps in a certain implementation or embodiment may also be implemented as an independent embodiment, and an order of the steps in a certain implementation or embodiment may be arbitrarily exchanged. Furthermore, optional manners or optional examples in a certain implementation or embodiment may be arbitrarily combined; in addition, various implementations or embodiments may be arbitrarily combined. For example, some or all of the steps of different implementations or embodiments may be arbitrarily combined, and a certain implementation or embodiment may be arbitrarily combined with optional manners or optional examples of other implementations or embodiments.

Other embodiments of the present invention will be apparent to those skilled in the art from consideration of the specification and practice of the present disclosed here. The present invention is intended to cover any variations, uses, or adaptations of the present invention following the general principles thereof and including such departures from the present invention as come within known or customary practice in the art. It is intended that the specification and examples be considered as illustrative, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

**Claims**

1. A method for information transmission, performed by a user equipment (UE), comprising:
   sending capability information of the UE to a network device, wherein the capability information is configured for the network device to determine a number n of rounds of reference signal measurements to be performed by the UE in I receiving beam directions, and one round of reference signal measurement comprises one or more reference signal measurements in X receiving beam directions of J antennas, wherein the J antennas cover the I receiving beam directions, J is a positive integer greater than 2, X is a positive integer less than or equal to J, and I is a positive integer greater than J.

2. The method according to claim 1, wherein the capability information comprises: a receiving beam coverage factor, and the receiving beam coverage factor is configured to determine the number n of rounds.

3. The method according to claim 1 or 2, wherein the number n of rounds is determined according to number of receiving beam directions associated with each antenna and number of receiving beam directions overlapping between the J antennas.

4. The method according to any one of claims 1 to 3, wherein in a case where J=2, and each antenna is associated with r receiving beam directions, the number n of rounds is represented by:

$$n = r - Floor(m/2)$$

where n represents the number n of rounds of reference signal measurements, m represents number of receiving beam directions overlapping between the J antennas, and Floor() represents rounding down.

5. The method according to any one of claims 1 to 4, further comprising:
receiving a measurement configuration sent by the network device, wherein the measurement configuration comprises: a measurement duration for the reference signal measurements in the I receiving beam directions, wherein a beam scanning coefficient N for determining the measurement duration is determined based on the capability information.

6. The method according to claim 5, wherein the beam scanning coefficient N is equal to the number n of rounds.

7. The method according to any one of claims 1 to 4, wherein the antenna comprises: an antenna panel.

8. The method according to any one of claims 1 to 4, wherein the J antennas of the UE support respective reference signal measurements in the same or different receiving beam directions simultaneously.

9. The method according to any one of claims 1 to 4, wherein the UE comprises the J antennas.

10. The method according to any one of claims 1 to 4, wherein the J antennas of the UE cover the I receiving beam directions.

11. The method according to any one of claims 1 to 4, wherein the J antennas of the UE are able to perform the reference signal measurement in the X receiving beam directions simultaneously.

12. A method for information transmission, performed by a network device, comprising:
receiving capability information sent by a user equipment (UE), wherein the capability information is configured to determine a number n of rounds of reference signal measurements to be performed by the UE in I receiving beam directions, and one round of reference signal measurement comprises one or more reference signal measurements in X receiving beam directions of J antennas, wherein the J antennas cover the I receiving beam directions, J is a positive integer greater than 2, X is a positive integer less than or equal to J, and I is a positive integer greater than J.

13. The method according to claim 12, wherein the capability information comprises: a receiving beam coverage factor configured to indicate the number n of rounds.

14. The method according to claim 10 or 11, wherein the number n of rounds is determined according to number of receiving beam directions associated with each antenna and number of receiving beam directions overlapping between the J antennas.

15. The method according to claim 14, wherein in a case where J=2, and each antenna is associated with r receiving beam directions, the number n of rounds is represented by:

$$n = r - Floor(m/2)$$

where n represents the number n of rounds of reference signal measurements, m represents the number of receiving beam directions overlapping between the J antennas, and Floor() represents rounding down.

16. The method according to any one of claims 12 to 15, further comprising:

determining a beam scanning coefficient N according to the capability information; and
determining a measurement duration for the UE to perform the reference signal measurements in the I receiving beam directions according to the beam scanning coefficient N.

17. The method according to claim 16, wherein the beam scanning coefficient N is equal to the number n of rounds.

18. The method according to claim 16 or 17, further comprising:
sending a measurement configuration to the UE, wherein the measurement configuration at least comprises: the measurement duration.

19. The method according to any one of claims 12 to 15, wherein the antenna comprises: an antenna panel.

20. The method according to any one of claims 12 to 15, wherein the J antennas of the UE support respective reference signal measurements in the same or different receiving beam directions simultaneously.

21. The method according to any one of claims 12 to 15, wherein the UE comprises the J antennas.

22. The method according to any one of claims 12 to 15, wherein the J antennas of the UE cover the I receiving beam directions.

23. The method according to any one of claims 12 to 15, wherein the J antennas of the UE are able to perform the reference signal measurement in the X receiving beam directions simultaneously.

24. An apparatus for information transmission, set in a user equipment (UE), comprising:
a transceiver module configured to send capability information of the UE to a network device, wherein the capability information is configured for the network device to determine a number n of rounds of reference signal measurements to be performed by the UE in I receiving beam directions, and one round of reference signal measurement comprises one or more reference signal measurements in X receiving beam directions of J antennas, wherein the J antennas cover the I receiving beam directions, J is a positive integer greater than 2, X is a positive integer less than or equal to J, and I is a positive integer greater than J.

25. An apparatus for information transmission, set in a network device, comprising:
a transceiver module configured to receive capability information sent by a user equipment (UE), wherein the capability information is configured to determine a number n of rounds of reference signal measurements to be performed by the UE in I receiving beam directions, and one round of reference signal measurement comprises one or more reference signal measurements in X receiving beam directions of J antennas, wherein the J antennas cover the I receiving beam directions, J is a positive integer greater than 2, X is a positive integer less than or equal to J, and I is a positive integer greater than J.

26. A communication device, comprising a processor, a transceiver, a memory and an executable program stored in the memory and runnable by the processor, wherein the processor is configured to perform the method for information transmission according to any one of claims 1 to 11 or claims 12 to 23 when running the executable program.

27. A computer storage medium, having stored therein an executable program that, when executed by a processor, causes the method for information transmission according to any one of claims 1 to 11 or claims 12 to 23 to be implemented.

FIG. 1

FIG. 2

```
┌─────────┐                      ┌──────────┐
│   UE    │                      │ network  │
│         │                      │  device  │
└─────────┘                      └──────────┘
     │        data communication      │
     │◄──────────────────────────────►│
     │                                │
     │ 301: sending capability        │
     │ information of the             │
     │ UE to a network device, where  │
     │ the capability                 │
     │ information is configured for  │
     │ the network                    │
     │ device to determine number n   │
     │ of rounds of                   │
     │ reference signal measurements  │
     │ to be                          │
     │ performed by the UE in I       │
     │ receiving beam                 │
     │ directions, and one round of   │
     │ reference signal               │
     │ measurement comprises one or   │
     │ more                           │
     │ reference signal measurements  │
     │ in X receiving                 │
     │ beam directions of J antennas, │
     │ where the J                    │
     │ antennas cover the I receiving │
     │ beam                           │
     │ directions, J is a positive    │
     │ integer greater than           │
     │ 2, X is a positive integer     │
     │ less than or equal to          │
     │ J, and I is a positive integer │
     │ greater than J                 │
     │                                │
```

FIG. 3

FIG. 4

| UE | | network device |
|---|---|---|

data communication

501: receiving a measurement configuration sent by the network device, where the measurement configuration includes: a measurement duration for the reference signal measurements in the I receiving beam directions, and a beam scanning coefficient N for determining the measurement duration is determined based on the capability information

FIG. 5

| UE | | network device |
|---|---|---|

data communication

601: receiving capability information sent by a UE, where the capability information is configured to determine number n of rounds of reference signal measurements to be performed by the UE in I receiving beam directions, and one round of reference signal measurement includes one or more reference signal measurements in X receiving beam directions of J antennas, where the J antennas cover the I receiving beam directions, J is a positive integer greater than 2, X is a positive integer less than or equal to J, and I is a positive integer greater than J

FIG. 6

| UE | | network device |
|---|---|---|

data communication

701: determining a beam scanning coefficient N according to the capability information

702: determining a measurement duration for the UE to perform the reference signal measurements in the I receiving beam directions according to the beam scanning coefficient N

FIG. 7

| UE | | network side device |
|---|---|---|

data communication

801: sending a measurement configuration to the UE, where the measurement configuration at least includes: the measurement duration

FIG. 8

apparatus for information transmission 100

transceiver module 110

FIG. 9

apparatus for information transmission 200

transceiver module 210

processing module 220

FIG. 10

Memory

Processing Component

Communication Component

Processor

820

Power Component

Multimedia Component

Audio Component

Sensor Component

I/O Interface

812

FIG. 11

FIG. 12

**EP 4 668 938 A1**

## INTERNATIONAL SEARCH REPORT

| International application No. |
|---|
| **PCT/CN2023/075758** |

### A. CLASSIFICATION OF SUBJECT MATTER

H04W72/044(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, DWPI, CNKI: 参考信号, 测量, 次数, 轮数, 能力, 用户设备, 用户装置, 终端, 波束, 方向, 相同, 重叠, 重合, RS, reference, signal, measur+, round, number, times, UE, terminal, capability, beam, direction, overlap, same

### C. DOCUMENTS CONSIDERED TO BE RELEVANT

| Category* | Citation of document, with indication, where appropriate, of the relevant passages | Relevant to claim No. |
|---|---|---|
| A | US 2021281294 A1 (SONY CORP.) 09 September 2021 (2021-09-09) description, paragraphs 0138-0165 | 1-27 |
| A | CN 109890078 A (HUAWEI TECHNOLOGIES CO., LTD.) 14 June 2019 (2019-06-14) entire document | 1-27 |
| A | CN 115529667 A (HUAWEI TECHNOLOGIES CO., LTD.) 27 December 2022 (2022-12-27) entire document | 1-27 |
| A | CN 111106916 A (VIVO COMMUNICATION TECHNOLOGY CO., LTD.) 05 May 2020 (2020-05-05) entire document | 1-27 |
| A | US 2022377758 A1 (NOKIA TECHNOLOGIES OY) 24 November 2022 (2022-11-24) entire document | 1-27 |

☐ Further documents are listed in the continuation of Box C.     ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 October 2023** | **17 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

26

## INTERNATIONAL SEARCH REPORT
### Information on patent family members

International application No.

**PCT/CN2023/075758**

| Patent document cited in search report | | | Publication date (day/month/year) | Patent family member(s) | | | Publication date (day/month/year) |
|---|---|---|---|---|---|---|---|
| US | 2021281294 | A1 | 09 September 2021 | JPWO | 2020031762 | A1 | 09 September 2021 |
|  |  |  |  | WO | 2020031762 | A1 | 13 February 2020 |
| CN | 109890078 | A | 14 June 2019 | CA | 3044493 | A1 | 27 September 2018 |
|  |  |  |  | BR | 112019011295 | A2 | 08 October 2019 |
|  |  |  |  | EP | 3537809 | A1 | 11 September 2019 |
|  |  |  |  | US | 2019261345 | A1 | 22 August 2019 |
|  |  |  |  | JP | 2020507236 | A | 05 March 2020 |
|  |  |  |  | WO | 2018171647 | A1 | 27 September 2018 |
|  |  |  |  | CN | 108633068 | A | 09 October 2018 |
|  |  |  |  | CN | 109890079 | A | 14 June 2019 |
|  |  |  |  | IN | 201937020795 | A | 27 September 2019 |
|  |  |  |  | VN | 67864 | A | 30 January 2020 |
|  |  |  |  | CN | 110809900 | A | 18 February 2020 |
| CN | 115529667 | A | 27 December 2022 | WO | 2022267876 | A1 | 29 December 2022 |
| CN | 111106916 | A | 05 May 2020 | JP | 2022518198 | A | 14 March 2022 |
|  |  |  |  | KR | 20210107816 | A | 01 September 2021 |
|  |  |  |  | WO | 2020143657 | A1 | 16 July 2020 |
|  |  |  |  | EP | 3910849 | A1 | 17 November 2021 |
|  |  |  |  | US | 2021336712 | A1 | 28 October 2021 |
|  |  |  |  | SG | 11202107585 | SA | 30 August 2021 |
|  |  |  |  | IN | 202127035102 | A | 10 September 2021 |
| US | 2022377758 | A1 | 24 November 2022 | EP | 4092920 | A2 | 23 November 2022 |

Form PCT/ISA/210 (patent family annex) (July 2022)